# EUROPÄISCHE PATENTSCHRIFT

(11) **EP 1 910 450 B1**
(45) Veröffentlichungstag und Bekanntmachung des Hinweises auf die Patenterteilung: **24.12.2008**
(21) Anmeldenummer: 06777953.8
(22) Anmeldetag: 25.07.2006
(51) Int. Cl.: C08J 7/04

(54) **BEHÄLTER AUS KUNSTSTOFFMATERIALIEN MIT EINER POLYMEREN FLUORORGANISCHEN INNENBESCHICHTUNG FÜR WIRKSTOFFFORMULIERUNGEN FÜR DEN PFLANZEN- ODER MATERIALSCHUTZ**
CONTAINER MADE FROM PLASTICS MATERIALS WITH A POLYMERIC ORGANOFLUORINE INTERIOR COATING FOR ACTIVE-COMPOUND FORMULATIONS FOR CROP PROTECTION OR PROTECTION OF MATERIALS
CONTENANT EN MATIERES PLASTIQUES DOTE D'UN REVETEMENT INTERNE FLUORORGANIQUE POLYMERIQUE ET DESTINE A DES FORMULATIONS DE PRINCIPE ACTIF AUX FINS DE PROTECTION DES PLANTES OU DES MATERIAUX

(30) Priorität: 26.07.2005 DE 102005034889
(43) Veröffentlichungstag der Anmeldung: 16.04.2008
(73) Patentinhaber: BASF SE, 67056 Ludwigshafen (DE)
(72) Erfinder: KELLER, Harald, 67069 Ludwigshafen (DE); DÖHNERT, Detlef, 67061 Ludwigshafen (DE); MAYER, Winfried, 55270 Bubenheim (DE); ALTENHOFER, Hilar, 67365 Schwegenheim (DE)
(74) Vertreter: Reitstötter - Kinzebach
(86) Internationale Anmeldenummer: PCT/EP2006/064621
(87) Internationale Veröffentlichungsnummer: WO 2007/012640

(56) Entgegenhaltungen:
- EP-A2- 1 028 139
- WO-A-01/51222
- WO-A-02/47829
- DE-A1- 19 803 488

## Beschreibung

Die vorliegende Erfindung betrifft Behälter aus Kunststoffmaterialien mit einer polymeren fluororganischen Innenbeschichtung für den Pflanzen- oder Materialschutz.

Formulierungen von Wirkstoffen für den Pflanzen- oder Materialschutz, beispielsweise flüssige Formulierungen wie wässrige oder nicht-wässrige Suspensionskonzentrate (SC), emulgierbare Konzentrate (EC), Suspoemulsionskonzentrate (SEC), lösungsmittelhaltige, dispergierbare Konzentrate (DC), wasserlösliche Konzentrate (SL), wässrige Emulsionen (EW), aber auch feste Formulierungen wie wasserdispergierbare Granulate (WG) und wasserlösliche Granulate (SG), wasserdispergierbare Pulver (WP) und wasserlösliche Pulver (SP) werden zu Zwecken der Lagerung oder des Transports wie für den Verkauf häufig in Behältern aus Kunststoffmaterialien verpackt. Der Vorteil von Kunststoffbehältern ist neben ihrem geringen Gewicht ihre vergleichsweise hohe Korrosionsfestigkeit, ihre isolierende Wirkung gegenüber elektrischen Strömen und Wärme sowie ihre einfache Herstellbarkeit.

Behälter aus Kunststoffmaterialien haben jedoch den Nachteil, dass die Wandmaterialien dieser Behälter, z. B Polyethylen, Polyethylenterephthalat, Polypropylen und Polyamid, von organischen Lösungsmitteln angegriffen werden oder für diese nur eine unzureichende Barriere darstellen, so dass etwaige Lösungsmittelbestandteile der Formulierungen durch die Behälterwände diffundieren und an die Umwelt abgegeben werden können. Zudem besteht die Gefahr, dass die in den Wirkstoffformulierungen enthaltenen schwerflüchtigen organischen Bestandteile in das Behälterwandmaterial eindringen (migrieren), was die Wiederverwendung und Entsorgung dieser Behälter erschwert. Ein weiteres Problem ist darin zu sehen, dass die meisten Wirkstoffformulierungen zu den Behälterwandmaterialien eine hohe Adhäsion zeigen, so dass sich die Behälter gelegentlich nicht vollständig entleeren lassen und Restmengen der Wirkstoffformulierungen im Behälter verbleiben können, die sich auch durch intensives Spülen nicht vollständig entfernen lassen. Auch diese Eigenschaft steht einer Wiederverwendung häufig entgegen und erhöht die Entsorgungskosten.

Mittlerweile werden Kunststoffbehälter angeboten, deren Innenwände mit einer Barrierebeschichtung, z. B. aus Ethylen-Vinylalkohol-Copolymeren (EVOH), versehen sind, sowie durch Coextrusion hergestellte Behälter aus Polyethylen mit innenliegenden Polyamid- oder EVOH-Schichten. Diese Innenschicht soll eine Diffusion flüchtiger Bestandteile durch die Kunststoffbehälterwände verringern und eine Migration organischer Bestanteile in die Behälterwand erschweren. Beispiele hierfür sind die von der Fa. Harcostar unter der Bezeichnung SurtTech® vertriebenen Kunststoffgebinde.

Verschiedentlich wurde vorgeschlagen, die Innenwände von Behältern mit einer Schicht aus fluororganischen Polymeren zu versehen (siehe z. B. WO 01/51222 und dort zitierte Literatur). Bei den verwendeten fluororganischen Polymeren handelt es sich in der Regel um Polytetrafluorethylen (PTFE), fluoriertes Ethylen-Propylen-Copolymer (FEP), Ethylen-Tetrafluorethylen-Copolymere (ETFE), Polyvinylidenfluorid (PVDF) sowie perfluorierte Polyether (häufig als Polyperfluoralkoxyalkane (PFA) bezeichnet). Durch diese Beschichtungen wird jedoch die Adhäsion von Wirkstoffzusammensetzungen an den Behälteroberflächen nur unzureichend verringert.

Die GB 2207368 schlägt vor, Kunststoffbehälter aus hochdichtem Polyethylen (HDPE) mit einer Schicht aus Organosiloxanen zur Verbesserung der Stabilität der Behälter zu versehen. Diese Beschichtungen verringern jedoch nur in unzulänglicher Weise die Adhäsion der Wirkstoffformulierungen an den Behälterwänden.

Die EP-A 1206976 wiederum beschreibt Apparate und Apparateteile mit Oberflächen, die eine Mikrostruktur aufweisen, und die beispielsweise mit fluororganischen Polymeren hydrophobiert sind. Diese Apparate und Apparateteile dienen der Verarbeitung, dem Transport oder der Lagerung von Dispersionen. Naturgemäß sind diese Apparateteile nicht aus Kunststoff, sondern aus Metall, so dass das Problem der Penetration organischer Bestandteile in die Behälterwände nicht auftreten kann. Ähnliche Apparate und Anlagenteile werden in der WO 01/73162 beschrieben.

Die WO 2004/085557 wiederum beschreibt ein Verfahren zur Erhöhung der Korrosionsbeständigkeit von Tuben, wobei die Innenwände der Tuben mit mindestens 1 Fluorpolymer beschichtet werden. Bei den Tuben handelt es sich typischerweise um solche aus einem Aluminiummaterial. Die Verwendung derartiger Tuben zur Aufnahme von Wirkstoffformulierungen für den Pflanzen- oder Materialschutz wird darin nicht beschrieben.

Der vorliegenden Erfindung liegt somit die Aufgabe zugrunde, Behälter aus Kunststoffmaterialien für Wirkstoffformulierungen für den Pflanzen- oder Materialschutz bereitzustellen, welche sich zum einen gut entleeren lassen und aus denen sich anhaftende Formulierungen in einfacher Weise, beispielsweise durch Waschen mit Wasser, leicht und vollständig entfernen lassen. Zudem soll ein Eindringen organischer Bestandteile in die Kunststoffbehälterwände vermieden werden. Weiterhin sollen die Behälter leicht herstellbar sein.

Diese Aufgabe wird überraschenderweise gelöst durch Behälter aus Kunststoffmaterialien, deren Innenwände mit einer polymeren, fluororganischen Beschichtung versehen sind, die an ihrer Oberfläche eine Vielzahl an Perfluoralkylgruppen aufweist.

Dementsprechend betrifft die vorliegende Erfindung Behälter aus Kunststoffmaterialien, deren Innenwände mit einer polymeren, fluororganischen Beschichtung versehen sind, welche an ihrer Oberfläche eine Vielzahl an Perfluoralkylgruppen aufweist, und deren Verwendung für Wirkstoffformulierungen für den Pflanzen- oder Materialschutz.

Die Beschichtung der Innenwände mit der erfindungsgemäßen polymeren, fluororganischen Beschichtung gewährleistet zum einen eine gute Entleerbarkeit der Behälter aufgrund einer besonders geringen Adhäsion der Wirkstoffformulierungen an den Behälterwänden. Zudem verhindert die erfindungsgemäße Beschichtung in besonders wirksamer Weise ein Eindringen organischer Bestandteile in die aus Kunststoffmaterial gebildeten Behälterwände und damit auch die Permeation flüchtiger, organischer Bestandteile durch die Behälterwände und deren Abgabe an die Umwelt. Überdies zeichnen sich die erfindungsgemäßen polymeren Beschichtungen durch eine gute Haftung auf den Behälterinnenwänden und damit durch eine hohe Stabilität aus. Zudem lassen sich diese Beschichtungen in einfacher Weise auf die Behälterinnenwände konventioneller Behältnisse aus Kunststoffmaterialen aufbringen, ohne dass es besonderer Techniken bedarf.

Erfindungsgemäß weist die polymere, fluororganische Beschichtung der Behälterinnenwände an ihrer Oberfläche eine Vielzahl an Perfluoralkylgruppen auf. Unter Perfluoralkylgruppen versteht man lineare oder verzweigte Gruppen der allgemeinen Formel CₙF₂ₙ₊₁, und insbesondere lineare Gruppen der Formel (CF₂)ₙF, worin n für eine ganze Zahl steht, häufig für eine Zahl im Bereich von 2 bis 20, vorzugsweise für eine Zahl im Bereich von 3 bis 12, insbesondere für eine Zahl im Bereich von 4 bis 10 und speziell für eine Zahl im Bereich von 6 bis 8. Es versteht sich, dass die an der Oberfläche befindlichen Perfluoralkylgruppen bezüglich n gleich oder verschieden sein können. Besonders vorteilhafte Beschichtungen erhält man, wenn die Perfluoralkylgruppen an der Oberfläche der erfindungsgemäßen polymeren, fluororganischen Beschichtung im Mittel 4 bis 10 und speziell 6 bis 8 C-Atome aufweisen, d. h. n in Formel A liegt im Mittel im Bereich von 4 bis 10 und speziell im Bereich von 6 bis 8. Besonders gute Eigenschaften weist die erfindungsgemäße Beschichtung auf, wenn die Perfluoralkylgruppen unverzweigt, d. h. linear, sind.

Bevorzugte Perfluoralkylgruppen sind häufig terminaler Bestandteil einer größeren Moleküleinheit, die sich durch die allgemeinen Formel a bis f beschreiben lässt:

-(CH₂)ₘ-(CF₂)ₙF (a)

-C₆H₄-(CF₂)ₖF (b)

-(CF₂)ₙF (c)

-[OCF₂CF(CF₂)]_{q}F (d)

-(CH₂)ₘ-NRSO₂(CF₂)ₙF (e)

-C₆H₄-[OCF₂CF(CF₂)]_{q}F (f)

Hierin stehen m für 1, 2, 3 oder 4, n für 2 bis 20, vorzugsweise 3 bis 12, insbesondere 4 bis 10 und speziell 6 bis 8, und q für 1 bis 5. R steht insbesondere für Wasserstoff oder C₁-C₄-Alkyl.

Um die gewünschten Eigenschaften der Beschichtung zu erreichen, hat es sich als vorteilhaft erwiesen, wenn die Perfluoralkylgruppen wenigstens 1 Gew.-%, vorzugsweise wenigstens 2 Gew.-%, insbesondere wenigstens 5 Gew.-% und speziell wenigstens 10 Gew.-% der Beschichtung, d. h. bezogen auf die Gesamtmenge aller Beschichtungsbestandteile, ausmachen. In der Regel wird der Anteil der Perfluoralkylgruppen 50 Gew.-% und insbesondere 40 Gew.-%, bezogen auf die Gesamtmenge aller Beschichtungsbestandteile, nicht überschreiten. Dementsprechend liegt der Gehalt an organisch gebundenem Fluor, bezogen auf das Gesamtgewicht der Beschichtung, vorzugsweise im Bereich von 0,5 Gew.-% bis 40 Gew.-%, insbesondere im Bereich von 0,5 Gew.-% bis 35 Gew.-% und besonders bevorzugt im Bereich von 10 Gew.-% bis 30 Gew.-%.

Um eine ausreichende mechanische Stabilität der Beschichtung zu erreichen, hat es sich als vorteilhaft erwiesen, wenn die Dicke der Beschichtung wenigstens 0,01 µm, insbesondere wenigstens 0,05 µm und speziell wenigstens 0,1 µm (Mittelwert) beträgt. In der Regel wird die Beschichtung aus Kostengründen 500 µm, vorzugsweise 200 µm und insbesondere 100 µm nicht überschreiten. Dickere Beschichtungen sind jedoch zur Erreichung des erfindungsgemäßen Zweckes nicht nachteilig.

Die Dicke der Beschichtung kann der Fachmann in an sich bekannter Weise bestimmen. Die Schichtdicke lässt sich zudem in einfacher Weise aus der Menge des eingesetzten Beschichtungsmittels und der zu beschichtenden Innenfläche der Behälter berechnen oder zumindest mit ausreichender Zuverlässigkeit abschätzen.

Die erfindungsgemäße Beschichtung kann strukturiert oder unstrukturiert sein. Unter einer strukturierten Beschichtung versteht man eine Beschichtung, die eine Vielzahl von Erhebungen und Vertiefen im Mikrometerbereich aufweist und dementsprechend eine Rauhigkeit von wenigstens 0,5 µm und insbesondere wenigstens 1 µm aufweist. Die hier angegebenen Rauhigkeitswerte beziehen sich auf das quadratische Mittel (root mean square) des Abstands aller Punkte der Oberfläche zu der mittleren Oberfläche. Die Rauhigkeitswerte können in an sich bekannter Weise mittels Rasterkraftelektronenmikroskopie (AFM) oder Scanning-Elektronenmikroskopie (SEM) bestimmt werden kann. Eine solche Rauhigkeit kann zum einen dadurch erreicht werden, dass man die Beschichtung mechanisch aufraut oder das Substrat, d. h. die Behälterinnenwände, auf welche die Beschichtung aufgebracht wird, vor dem Aufbringen der Beschichtung aufraut, oder alternativ in die Beschichtung selbst strukturgebende Bestandteile, beispielsweise ein feinteiliges Pulver, mit Abmessungen im Mikrometerbereich, z. B. mit mittleren Durchmessern im Bereich von 0,5 bis 100 µm und speziell im Bereich von 1 bis 50 µm, einbringt. Es hat sich jedoch als vorteilhaft erwiesen, wenn die erfindungsgemäße Beschichtung möglichst keine Strukturierung aufweist, d. h. möglichst glatt ist. Dementsprechend beträgt die Rauhigkeit der Oberfläche der erfindungsgemäßen Beschichtung vorteilhafterweise weniger als 0,5 µm, häufig nicht mehr als 0,4 µm und insbesondere nicht mehr als 0,2 µm. Dementsprechend enthalten die erfindungsgemäßen Beschichtungen vorteilhafterweise keine strukturgebenden Bestandteile wie die oben erwähnten Pulver.

Die erfindungsgemäße fluororganische Polymerbeschichtung kann grundsätzlich in beliebiger Weise aufgebaut sein. Sie kann von aus unvernetzten filmbildenden Polymeren, welche Perfluoralkylgruppen aufweisen, oder aus Mischungen dieser Polymere mit weiteren filmbildenden Polymeren, welche keine Perfluoralkylgruppen aufweisen, aufgebaut sein. Sie kann auch aus vernetzten Polymeren, welche Perfluoralkylgruppen aufweisen, aufgebaut sein, wobei die vernetzten Polymere durch Vernetzung von Perfluoralkylgruppen tragenden Monomeren, Präpolymeren oder Polymeren, gegebenenfalls unter Zusatz eines Vernetzungsmittels, auf der Behälterwand gebildet werden. Bevorzugt sind vernetzte Polymerbeschichtungen, da diese sich durch eine besonders gute Haftung auf den Kunststoffmaterialien der Behälterwände auszeichnen.

In einer bevorzugten Ausführungsform umfasst die polymere fluororganische Beschichtung wenigstens ein vernetztes oder unvernetztes Polymer, insbesondere ein Homo- oder Copolymer mit einem C-C-Rückgrat, das eine Vielzahl von Seitenketten aufweist (Kammpolymer), welche ihrerseits Perfluoralkylgruppen, z. B. in Form der o. g. Gruppen a, b, c, d, e oder f aufweisen. Derartige Polymere sind dadurch erhältlich, dass man wenigstens ein ethylenisch ungesättigtes Monomer M1, das wenigstens eine Perfluoralkylgruppe aufweist, und gegebenenfalls ein oder mehrere Monomer M2, die von den Monomeren M1 verschieden sind, homo- oder copolymerisiert.

Beispiele für geeignete Monomere M1 sind die Ester und die Amide von monoethylenisch ungesättigten Carbonsäuren wie Acrylsäure und Methacrylsäure mit (Per)fluoralkanolen der Formeln la bis Ic bzw. mit (Per)fluoralkylaminen der Formeln IIa bis IId:

HO(CH₂)ₐ-(CF₂)_{b}F (Ia)

H[OCF₂CF(CF₂)]_{q}F (Ib)

HO(CH₂)ₐ-NRSO₂-(CF₂)_{b}F (Ic)

H₂N(CH₂)ₐ-(CF₂)_{b}F (IIa)

HN[(CH₂)ₐ-(CF₂)_{b}F]₂ (IIb)

H₂N-C₆H₄-(CF₂)ₖF (IIc)

H₂N(CH₂)ᵣ[OCF₂CF(CF₂)]_{q}F (IId)

worin a für 0, 1, 2, 3 oder 4 steht, b für einen Wert von 2 bis 20, vorzugsweise 3 bis 12, insbesondere 4 bis 10 und speziell 6 bis 8 steht, q und R die zuvor genannten Bedeutungen aufweisen und r für 2, 3 oder 4 steht. Beispiele für Monomere M1 sind weiterhin Derivate des Styrols, die am Benzolring des Styrols eine Perfluoralkylgruppe oder eine Gruppe der Formel d tragen. Weitere geeignete Monomere sind Vinylether der vorgenannten Alkohole la oder Ib. Der Anteil an Monomeren M1, bezogen auf die Gesamtmenge der das fluororganische Polymer bildenden Monomere wird in der Regel wenigstens 30 mol-%, vorzugsweise wenigstens 50 mol-% und insbesondere wenigstens 60 mol-%, z.B. 30 bis 99 mol-%, betragen. das Gewichtsverhältnis von Monomer M1 zu Monomer M2 liegt insbesondere im Bereich von 1:1 bis 50:1, insbesondere im Bereich von 2:1 bis 40:1 und speziell im Bereich von 3:1 bis 20:1

Geeignete Comonomere sind grundsätzlich alle mit den Monomeren M1 copolymerisierbaren, monoethylenisch ungesättigten Monomere. Hierzu zählen monoethylenisch ungesättigte Monomere M2a, die unpolar sind, insbesondere monoethylenisch ungesättigte Olefine, Ester monoethylenisch ungesättigter C₃-C₈-Monocarbonsäuren wie insbesondere der Acrylsäure oder der Methacrylsäure mit C₁-C₂₀-Alkanolen oder mit C₅-C₁₀-Cycloalkanolen, vinylaromatische Verbindungen wie Styrol, Vinyltoluol und α-Methylstyrol und dergleichen. Hierzu zählen weiterhin monoethylenisch ungesättigte funktionelle Monomere wie monoethylenisch ungesättigte C₃-C₈-Monocarbonsäuren und C₄-C₈-Dicarbonsäuren und deren Anhydride wie Acrylsäure, Methacrylsäure, Maleinsäure, Fumarsäure und Maleinsäureanhydrid, weiterhin Hydroxyalkylester der vorgenannten Monocarbonsäuren wie 2-Hydroxymethylacrylat und Hydroxypropylacrylat, Aminogruppen tragende monoethylenisch ungesättigte Monomere wie N-(2-Aminoethyl)acrylamid oder -methacrylamid, N-(3-Aminopropyl)acrylamid oder -methacrylamid, 2-Aminoethylacrylat oder -methacrylat sowie 3-Aminopropylacrylat oder -methacrylat, weiterhin Oxirangruppen tragende Monomere wie Glycidylacrylat oder Glycidylmethacrylat (Monomere M2b).

Derartige Kammpolymere mit C-C-Rückgrat und Perfluoralkylgruppen tragenden Seitenketten sind aus dem Stand der Technik hinreichend bekannt, beispielsweise aus der JP 09296134, JP 04120148, JP 03287615, DE 10150954, DE 10261285 und WO 2004/013225.

Geeignete fluororganische Polymere sind weiterhin polymeranaloge Umsetzungsprodukte von Copolymeren der Maleinsäure mit Alkoholen der allgemeinen Formel Ia bis Ic und/oder mit Aminen der allgemeinen Formel IIa bis IId. Geeignete Comonomere sind dabei die vorgenannten Monomere M1 sowie die vorgenannten unpolaren Comonomere M2a. Derartige Copolymere sind beispielsweise aus der DE 10150954 sowie aus WO 97/11218 bekannt.

Die Kammpolymere können als solche oder, sofern sie ein Monomer mit reaktiven funktionellen Gruppen einpolymerisiert enthalten (vernetzbares Kammpolymer) zusammen mit einem Vernetzungsmittel eingesetzt werden, welches eine gegenüber den reaktiven Gruppen des Kammpolymers komplementäre Reaktivität aufweist und mit diesen Gruppen unter Bindungsbildung reagieren kann. Beispiele für reaktive Gruppen im Kammpolymer sind OH, COOH, NCO-Gruppen, Anhydridgruppen, Oxirangruppen oder NH₂. Gemäß einer besonders bevorzugten Ausführungsform handelt es sich bei den reaktiven Gruppen um COOH und Anhydridgruppen. Derartige reaktive Gruppen lassen sich in das Kammpolymer durch geeignete Comonomere M2, wie oben genannt, bei der Herstellung der Kammpolymere einführen.

Beispiele für Vernetzungsmittel sind
- aliphatische, cycloaliphatische und aromatische Di-, Tri- und Polyisocyanate, z. B. Tetramethylendiisocyanat, 2,3,3-Trimethylhexamethylendiisocyanat, 1,4-Cyclohexylendiisocyanat, 1,4-Phenylendiisocyanat, 2,4- und 2,6-Toluylendiisocyanat und deren Isomerengemische (z. B. 80 % 2,4- und 20 % 2,6-Isomer), 1,5-Naphthylendiisocyanat, 2,4- und 4,4'-Diphenylmethandiisocyanat, Triphenylmethan-4,4',4"-triisocyanat, Isocyanatpräpolymere und Polyisocyanate, die durch Addition der zuvor genannten Isocyanate an polyfunktionelle Hydroxyl- oder Amingruppen-haltige Verbindungen erhältlich sind, Polyisocyanate, die durch Biuret-, Allophanat- oder Isocyanuratbildung entstehen, reversibel blockierte Di- oder Polyisocyanate,
- methylolgruppenhaltige Verbindungen, wie beispielsweise Oligomere oder Polymere, z. B. niedermolekulare Melamin-Formaldehyd Harze (MF-Harze) wie Poly(hydroxymethyl)melamin mit 2, 3, 4, 5 oder 6 Hydroxymethylgruppen und niedermolekulare Melamin-Formaldehyd Harze (MF-Harze) wie Poly(hydroxymethyl)melamin mit 2, 3, 4, 5 oder 6 Hydroxymethylgruppen, die mit einem C₁-C₆-Alkanol einem C₂-C₆-Polyol, einem Oligo-C₂-C₄-alkylenglykol modifiziert ist (modifiziertes MF-Harz), Harnstoff-Formaldehydharze, cyclische Harnstoffderivate mit N-Methylolgruppen wie 1,3-Bis(hydroxymethyl)-4,5-dihydroxyimidazolidin-2-on (DMDHEU), Bis(hydroxymethyl)-4,5-dihydroxyimidazolidinon, das mit einem C₁-C₆-Alkanol einem C₂-C₆-Polyol, einem Oligo-C₂-C₄-alkylenglykol modifiziert ist (modifiziertes DMDHEU bzw. mDMDHEU), 1,3-Bis(hydroxymethyl)harnstoff, 1,3-Bis(methoxymethyl)harnstoff; 1-Hydroxymethyl-3-methylharnstoff, 1,3-Bis(hydroxymethyl)imidazolidin-2-on (Dimethylolethylenharnstoff), 1,3-Bis(hydroxymethyl)-1,3-hexahydropyrimidin-2-on (Dimethylolpropylenharnstoff),1,3-Bis(methoxymethyl)-4,5-dihydroxyimidazolidin-2-on (DMeDHEU), Tetra(hydroxymethyl)acetylendiharnstoff,
- Oxirangruppen tragende Verbindungen z. B. Polyglycidylverbindungen, z. B. Glyciylether aliphatischer Di- oder Polyole und Glycidylester aliphatischer oder aromatischer Carbonsäuren.

Das Vernetzungsmittel wird vorzugsweise in einer Menge eingesetzt, dass einerseits eine wirksame Vernetzung erreicht wird und andererseits die Gewichtsanteil der Perfluoralkylgruppen, bezogen auf die Gesamtmenge an Kammpolymer + Vernetzungsmittel, in den oben genannten Bereichen liegen. Typischerweise betragen die Mengen an Vernetzungsmittel 10 bis 90 Gew.-%, häufig 20 bis 80 Gew.-%, insbesondere 70 bis 30 Gew.-% und speziell 40 bis 60 Gew.-%, bezogen auf die Gesamtmenge an Kammpolymer + Vernetzungsmittel.

In einer bevorzugten Ausführungsform der Erfindung setzt man zur Herstellung der Beschichtung ein Carboxylgruppen tragendes Kammpolymer mit Perfluoralkylgruppen, insbesondere ein Copolymer, das als Monomere M1, wenigstens einen Ester der Acrylsäure oder der Methacrylsäure mit einem Alkohol der Formeln Ia, Ib oder Ic, insbesondere mit einem Alkohol der Formel la, und als Monomere M2 wenigstens eine monoethylenisch ungesättigte Mono- oder Dicarbonsäure, z. B. Acrylsäure oder Methacrylsäure, und gegebenenfalls ein oder mehrere davon verschiedene Monomere M2 umfasst, zusammen mit einem Vernetzungsmittel ein. Geeignete Vernetzungsmittel sind insbesondere OH-Gruppen tragende Vernetzungsmittel und speziell N-Methylolgruppen tragende Vernetzungsmittel.

Die Herstellung der Beschichtungen erfolgt in an sich bekannter Weise, indem man ein flüssiges Beschichtungsmittel, das die beschichtungsbildenden Bestandteile enthält, auf die Behälterinnenwände aufbringt und anschließend die so erhaltene Beschichtung verfestigt, z. B. durch Trocknen und/oder Bewirken einer Vernetzungsreaktion (Härtung).

Die erfindungsgemäße polymere, fluororganische Beschichtung kann in an sich bekannter Weise auf die zu beschichtenden Innenwände der Kunststoffbehälter aufgebracht werden, beispielsweise durch Sprühen, Streichen, Walzen, Tauchen und dergleichen.

Gemäß einer ersten Ausführungsform bringt man Polymere, welche Perfluoralkylgruppen aufweisen, z. B. Kammpolymere, in Form eines flüssigen Beschichtungsmittels, beispielsweise einer Schmelze dieser Polymere, einer verdünnten Lösung oder einer Dispersion dieser Polymere in einem geeigneten flüssigen Dispergier- bzw. Lösungsmittel in der gewünschten Menge auf die zu beschichtende Innenflächen des Behälters auf. Beim Verfestigen beziehungsweise beim Trocknen des flüssigen Beschichtungsmittels erhält man dann eine Schicht des fluororganischen Polymeren, die an ihrer Oberfläche die gewünschten Perfluoralkylgruppen aufweist.

Gemäß einer zweiten, bevorzugten Ausführungsform der Erfindung bringt man eine flüssige Beschichtungszusammensetzung, die wenigstens ein vernetzbares Polymer, das Perfluoralkylgruppen aufweist, und wenigstens ein Vernetzungsmittel umfasst, das mit dem Perfluoralkylgruppen tragenden, vernetzbaren Polymeren unter Bindungsbildung reagiert und so eine polymere, vernetzte Beschichtung auf der Innenfläche der Behälterwände ausbildet, auf die Innenwände der Kunststoffbehälter auf. Die Vernetzung kann dabei photochemisch oder thermisch induziert werden.

Alternativ kann man so vorgehen, dass man polymerisierbare, niedermolekulare Substanzen, d. h. Monomere oder Oligomere, welche Perfluoralkylgruppen aufweisen, in Form eines flüssigen Beschichtungsmittels auf die zu beschichtenden Behälterinnenwände aufbringt und anschließend in an sich bekannter Weise eine Polymerisation der niedermolekularen Bestandteile bewirkt, beispielsweise photochemisch oder thermisch oder durch Zusatz von Kondensationsmitteln. Hierbei bildet sich ebenfalls eine vernetzte polymere, fluororganische Beschichtung auf den Innenwänden der Kunststoffbehälter, welche an ihrer Oberfläche die gewünschten Perfluoralkylgruppen aufweist.

Beispiele für geeignete polymerisierbare niedermolekulare Substanzen sind ethylenisch ungesättigte Verbindungen, die wenigstens eine Perfluoralkylgruppe aufweisen, z. B. die vorgenannten Ester und Amide monoethylenisch ungesättigter Monocarbonsäuren mit den Alkoholen la, Ib oder Ic bzw. mit den Amiden IIa, IIb, IIc oder IId. Beispiele für polymerisierbare niedermolekulare Substanzen sind auch Siloxane und Siloxanoligomere, die freie, Si-gebundene OH-Gruppen und Perfluoralkylgruppen aufweisen, z. B. Verbindungen der Formeln IIIa bis IIId, deren Mischungen und deren Oligomere:

(HO)₃Si-R (IIIa),

(HO)₂SiR₂ (IIIb),

(HO)₃Si-OR (IIIa),

(HO)₂Si(OR)₂ (IIIb),

worin R für einen wenigstens eine Perfluoralkylgruppe aufweisenden Rest, z. B. einen Rest der Formeln a, b, c, e oder f, steht.

Gegebenenfalls kann in dieser dritten Ausführungsform das Beschichtungsmittel auch reaktive Verbindungen enthalten, die keine fluororganischen Gruppen aufweisen, sog. Reaktivverdünner, die aber unter Vernetzungsbedingungen mit den niedermolekularen fluororganischen Substanzen unter Bindungsbildung reagieren. Im Falle ethylenisch ungesättigter fluororganischer Verbindungen handelt es sich beispielsweise um sog. Reaktiwerdünner, d. h. ein- oder mehrfach ethylenisch ungesättigte niedermolekulare Verbindungen ohne Perfluoralkylgruppen. Im Falle von Siloxanen handelt es sich beispielsweise um Alkylsiloxane, z. B. um Tetra-C₁-C₄-alkoxysilane wie Tetraethoxysilan, Tri-C₁-C₄-alkoxy-C₁-C₂₀-alkylsilane wie Triethoxyethylsilan, Triethoxyoctylsilan oder Triethoxyoctadecylsilan, oder Di(C₁-C₄-alkoxy)-di(C₁-C₂₀-alkyl)silane wie Dimethyldiethoxysilan, Diethyldiethoxysilan und dergleichen.

Im Hinblick auf die gewünschten dünnen Schichtdicken hat es sich bei allen drei Ausführungsformen als vorteilhaft erwiesen, als Beschichtungsmittel eine verdünnte Lösung oder Dispersion der beschichtungsbildenden Bestandteile einzusetzen. Die Konzentration an beschichtungsbildenden Bestandteilen in diesen Lösungen beziehungsweise Dispersionen liegt in der Regel im Bereich von 0,5 bis 30 Gew.-%, häufig im Bereich von 1 bis 25 Gew.-%, vorzugsweise insbesondere im Bereich von 1 bis 10 Gew.-%, besonders bevorzugt im Bereich von 2 bis 6 Gew.-%.

Geeignete Verdünnungsmittel können wässrig oder nicht wässrig sein. Beispiele für geeignete Verdünnungsmittel sind
- Wasser und Mischungen von Wasser mit Lösungsmitteln, welche mit Wasser mischbar sind, z. B. mit C₁-C₄-Alkanolen wie Methanol, Ethanol, n-Propanol, Isopropanol, n-Butanol, Isobutanol, tert.-Butanol, Diole mit 2 bis 6 C-Atomen wie Glykol, Propandiol, Butylglykol, Diethylenglykol, Dipropylenglykol, Triethylenglykol, weiterhin Glycerin, Acetonitril, Amide und Lactame wie Dimethylformamid, Dimethylacetamid, N-Methylpyrrolidon, Lactone wie Butyrolacton, Ketone mit 3 oder 4 C-Atomen wie Aceton;
- Alkohole, z. B. C₁-C₄-Alkanole, Diole mit 2 bis 6 C-Atomen und Glycerin;
- Halogenkohlenwasserstoffe, insbesondere Fluorkohlenwasserstoffe und Fluorchlorkohlenwasserstoffe und deren Mischungen mit aliphatischen, cycloaliphatischen oder aromatischen Kohlenwasserstoffen;
- Ester aliphatischer Carbonsäuren mit 1 bis 6 C-Atomen mit C₁-C₄-Alkanolen oder C₂-C₆-Alkandiolen wie Ethylacetat, Ethylpropionat, Ethylbutyrat, Hydroxyethylacetat;
- Ketone, wie Aceton, Methylethylketon, Cyclohexanon und dergleichen;
- Ether, wie Diethylether, Diisopropylether, Methyl-tert.-butylether, Methyldiglykol, Butyldiglykol und dergleichen.

Bevorzugte Lösungs- und Verdünnungsmittel sind neben Wasser, Lösungsmittel, die mit Wasser mischbar sind, und Mischungen dieser Lösungsmittel mit Wasser. Unter mit Wasser mischbar versteht man vorzugsweise solche Lösungsmittel, die sich bei 20 °C in einer Menge von wenigstens 100 ml/l homogen mit Wasser vermischen lassen.

Gegebenenfalls kann es erforderlich sein, im Anschluss an das Aufbringen des fluororganischen Beschichtungsmittels eine Härtung/Vernetzung der aufgebrachten Beschichtungsbestandteile durchzuführen. In Abhängigkeit von den gewählten Einsatzmaterialien kann die Härtung/Vernetzung photochemisch, d. h. durch Bestrahlen mit energiereicher Strahlung wie UV-Licht oder Elektronenstrahlung, oder thermisch, d. h. durch Anwendung erhöhter Temperatur, z. B. Temperaturen im Bereich von 40 bis 200 °C, insbesondere 60 bis 120 °C bewirkt werden. Natürlich wird man solche Bedingungen wählen, bei denen das Kunststoffmaterial der Behälter nicht zerstört oder angegriffen wird. Im Falle einer photochemischen Vernetzung können dem Beschichtungsmittel Photoinitiatoren zugesetzt werden. Im Falle einer thermisch induzierten Härtung wird man häufig Katalysatoren, welche die Vernetzungsreaktion katalysieren, z. B. Brönstedt- oder Lewis-Säuren, zusetzen. Im Falle von Siloxan-basierten Beschichtungen erfolgt eine Vernetzung in der Regel bereits bei Einwirken von Luftfeuchtigkeit bei Umgebungstemperatur.

Erfindungsgemäß handelt es sich bei den Behältern um solche aus Kunststoffmaterialien, d. h. der überwiegende Teil des Behälters, insbesondere die Behälterwände, welche mit der Wirkstoffformulierung in Kontakt kommen, werden von Kunststoffmaterialien gebildet. Neben den Kunststoffmaterialien können die Behälter auch andere Materialien wie Metalle umfassen, beispielsweise Mittel aus Metall zur Verbesserung der Formstabilität und/oder zum Schutz vor Beschädigungen, beispielsweise Mittel zur Verstärkung der Kanten, Mittel zur Verstärkung des Behälters im Bereich von Öffnungen zum Befüllen und/oder Entleeren des Behälters sowie Trage- oder Transportvorrichtungen, welche mit dem Behälter verbunden sind, und Verschlussmittel, beispielsweise Deckel- oder Schraubverschlüsse aus Metall. Zu den erfindungsgemäßen Behältern aus Kunststoffmaterialien zählen auch solche Behältnisse aus Kunststoffmaterialien, die als Innenbehälter zur Aufnahme in einen Behälter aus Metall bestimmt sind.

Je nach Ausgestaltung können die erfindungsgemäßen Behälter formstabil oder flexibel sein. Formstabil bedeutet in diesem Zusammenhang, dass der Behälter beim Befüllen beziehungsweise bei mechanischer Belastung seine Form nur geringfügig ändert und in entleertem beziehungsweise unbelastetem Zustand seine ursprüngliche Form weitgehend oder vollständig zurückerhält. Flexible Behälter sind demgegenüber solche Behälter, deren Form durch die Menge an Füllgut beziehungsweise durch einen Außenbehälter, in den sie eingepasst werden, bestimmt wird. Insbesondere betrifft die vorliegende Erfindung die Verwendung formstabiler Behälter aus Kunststoffmaterialien und insbesondere solcher formstabiler Behälter, die im Wesentlichen oder ausschließlich aus Kunststoffmaterialien aufgebaut sind.

Typische formstabile Behälter sind Kanister, Flaschen, Tonnen, Eimer, Fässer und dergleichen.

Beispiele für flexible Behälter sind Folienbeutel, Schläuche, Säcke, einschließlich Ventilbodensäcke, Kreuzbodensäcke, Flachsäcke, Inliner, Big Bags und dergleichen.

Die vorgenannten Behälter weisen in der Regel wenigstens eine oder zwei Öffnungen zum Befüllen des Behälters und/oder zur Entnahme der Wirkstoffformulierung auf. In der Regel sind diese Öffnungen mit üblichen Verschlussmitteln, wie Schraubdeckeln, Stopfen, Kapseln, Hähnen, Trockenkupplungen und dergleichen versehen. Die Größe der Behälter kann über weite Bereiche variieren und ihr Innenvolumen liegt, abhängig vom Behältertyp, häufig im Bereich von 0,01 bis 1000 l. Insbesondere kommen Behälter mit Innenvolumina im Bereich von 0,1 bis 100 l und speziell im Bereich von 0,5 bis 50 l zur Anwendung. Diese Behälter sind häufig in Form von Flaschen, Kanistern, Fässern und dergleichen ausgestaltet. Größere Behälter werden häufig als Kanister, Fässer, Big Bags oder Inliner ausgestaltet.

Erfindungsgemäß handelt es sich um Behälter aus Kunststoffmaterialien, d. h. die Wandmaterialien der Behälter, welche mit der Wirkstoffzusammensetzung in Kontakt treten, bestehen aus einem im Behälterbau üblichen Kunststoffmaterial. Beispiele für typische Kunststoffmaterialien sind Polyethylen, insbesondere Hochdruckpolyethylen (HDPE), Polypropylen, einschließlich syndiotaktischem, ataktischem und isotaktischem Polypropylen, Polyethylenterephthalat, weiterhin Koextrudate von Polyethylen oder Polypropylen mit Polyamiden, Koextrudate von Polyethylen oder Polypropylen mit Ethylencopolymeren wie Ethylen-Vinylacetat-Copolymeren, Ethylen-Vinylalkohol-Copolymeren, Koextrudate von Polyethylen oder Polypropylen mit Polyethylenterephthalat, Polyacrylnitril, Styrol-Acrlynitril und dergleichen. Bevorzugte Behälterwandmaterialien sind insbesondere Polyethylen, Polypropylen, sowie Polyethylen-Coextrudate, z. B. Coextrudate von Ethylen mit Polyamid oder mit Ethylen-Copolymeren wie Ethylen-Vinylalkohol, wobei das Polyethylen vorzugsweise die Außenseite der Behälter bildet.

Die Dicke der Behälterwände richtet sich naturgemäß nach der Größe beziehungsweise dem Innenvolumen der Behälter und liegt typischerweise im Bereich von 0,1 bis 10 mm und insbesondere im Bereich von 0,5 bis 5 mm (Mittel, ausgenommen solche Bereiche, in denen sich Öffnungen oder Mittel zum Transport der Behälter wie Handgriffe befinden).

Die erfindungsgemäßen Behälter eignen sich in besonderer Weise für die Aufnahme wässriger Wirkstoffformulierungen wie wässrige Suspensionskonzentrate (WSC), wässrige Emulsionen (EW), wasserlösliche Konzentrate (WL), wässrige Suspoemulsionen (SEC), sowie für davon verschiedene Wirkstoffformulierungen, die in Wasser dispergierbar oder emulgierbar sind, beispielsweise nicht-wässrige Suspensionskonzentrate (SC), emulgierbare Konzentrate (EC), lösungsmittelhaltige, dispergierbare Konzentrate (DC), Ölsuspensionskonzentrate, wasserlösliche Konzentrate (SL), wasserdispergierbare Granulate (WG) und wasserlösliche Granulate (SG), wasserdispergierbare Pulver (WP) und wasserlösliche Pulver (SP). Sie eignen sich insbesondere für die Aufnahme flüssiger Formulierungen und speziell flüssiger wässriger Formulierungen.

Bezüglich der Art der Wirkstoffe gibt es keine Beschränkungen. Es kann sich bei den Wirkstoffformulierungen um Formulierungen von Herbiziden, Fungiziden, Insektiziden, Akariziden, Nematiziden, Wachstumsregulatoren, Bakteriziden und sonstige Formulierungen handeln, wie sie typischerweise im Pflanzenschutz, einschließlich Saatgutbehandlung, und im Materialschutz, z. B. im Holzschutz, aber auch zur präventiven Bekämpfung von parasitären Organismen, welche Warmblüter befallen, eingesetzt werden.

Typischerweise handelt es sich bei den Wirkstoffen um organische Verbindungen, die typischerweise ein Molekulargewicht im Bereich von 150 bis 1000 Dalton aufweisen, und insbesondere um Wirkstoffe, die in Wasser nicht oder nur begrenzt löslich sind und typischerweise eine Löslichkeit in Wasser von weniger als 10 g/l, insbesondere weniger als 1 g/l, aufweisen (bei 25 °C und 1 bar).

Die zur Aufnahme in die erfindungsgemäßen Behälter bestimmten Formulierungen enthalten in der Regel den bzw. die Wirkstoff(e) in einer Gesamtmenge von 1 bis 90 Gew.-%, häufig 5 bis 80 Gew.-%, insbesondere 10 bis 70 Gew.-% und speziell 20 bis 60 Gew.-%, bezogen auf das Gesamtgewicht der Formulierung. Daneben enthalten die Formulierungen in der Regel noch oberflächenaktive Substanzen, insbesondere anionische und/oder nichtionische Tenside einschließlich wirkungssteigernder Adjuvantien, typischerweise in einer Gesamtmenge von 0,5 bis 60 Gew.-%, gegebenenfalls übliche Formulierungsadditive wie Entschäumer, Frostschutzmittel, Verdicker, Biozide in einer Gesamtmenge von bis zu 10 Gew.-% und wenigstens einen flüssigen oder festen Trägerstoff (Vehikel) in einer Menge von typischerweise 15 bis 75 Gew.-%, jeweils bezogen auf das Gesamtgewicht der Formulierung. In den wässrigen Formulierungen umfasst der Trägerstoff typischerweise Wasser, gegebenenfalls im Gemisch mit einem oder mehreren organischen Lösungsmitteln.

Die erfindungsgemäßen Behälter eignen sich in besonderer Weise zur Aufnahme wässriger Wirkstoffformulierungen, wie wässrige Suspensionskonzentrate, wässrige Suspoemulsionen und wässrige Emulsionen, aber auch wässrige Wirkstofflösungen. Derartige Formulierungen umfassen Wasser als Vehikel und gegebenenfalls organische Lösungsmittel, wie Alkanole und Alkandiole sowie gegebenenfalls die zuvor genannten weiteren Bestandteile, wie oberflächenaktive Substanzen, einschließlich Adjuvantien und Formulierungsadditive.

Die erfindungsgemäßen Behälter eignen sich insbesondere auch zur Aufnahme von Wirkstoffformulierungen, die ein organisches hydrophobes Lösungsmittel, d. h. solche, die mit Wasser nicht oder nur begrenzt mischbar sind (in der Regel < 50 g/l bei 25 °C und 1 bar), beispielsweise aliphatische order aromatische Kohlenwasserstoffe, Fettsäure-C₁-C₁₀-alkylester, insbesondere Methylester, N-C₄-C₁₀-alkylpyrrolidone oder deren Gemische in einer Menge von wenigstens 1 Gew.-%, z. B. 1 bis 90 Gew.-%, insbesondere 5 bis 80 Gew.-%, enthalten. Zu den Beispielen für solche Formulierungen zählen insbesondere in Wasser emulgierbare bzw. dispergierbare Konzentrate, d. h. nicht-wässrige Konzentrate, deren flüssiges Vehikel, im Wesentlichen organische Lösungsmittel und keine oder nur geringe Mengen (d. h. ≤ 1 Gew.-%, bezogen auf die Formulierung) Wasser umfasst, aber auch wässrige Formulierungen wie Suspoemulsionen oder Emulsionen, die neben Wasser auch ein organisches, hydrophobes Lösungsmittel, typischerweise in einer Menge von 1 bis 50 Gew.-%, umfassen.

Ein besonderer Vorteil der erfindungsgemäßen Behälter ist darin zu sehen, dass die Wirkstoffformulierungen, insbesondere die wässrigen Wirkstoffformulierungen, keine oder nur eine geringe Adhäsion zu den Behälterwänden zeigen und daher eine weitgehende oder vollständige Entleerbarkeit gewährleistet ist. Im Übrigen können Restmengen dieser Wirkstoffformulierungen, die im Behälter verbleiben, in einfacher Weise durch Spülen mit Wasser weitestgehend oder vollständig aus dem Behälter entfernt werden, ohne dass nennenswerte Restmengen an Formulierung oder Spülwasser an den Behälterwänden haften bleiben.

Die erfindungsgemäßen Behälter sind insbesondere auch zur Aufnahme von Wirkstoffformulierungen geeignet, die wenigstens ein organisches, unpolares Lösungsmittel, z. B. in einer Menge von wenigstens 1 Vol.-%, insbesondere wenigstens 5 Vol.-% enthalten. Bei diesen Wirkstoffzusammensetzungen verhindern die erfindungsgemäßen Beschichtungen besonders wirksam eine Penetration des Lösungsmittels durch die Behälterwände und ein Eindringen von organischen Bestandteilen in die Behälterwände.

Die erfindungsgemäßen Behälter eignen sich daher in besonderer Weise zur Aufbewahrung der Wirkstoffformulierungen. Der Begriff Aufbewahrung umfasst hierbei sowohl die Lagerung als auch den Transport der mit den Wirkstoffformulierungen befüllten Behälter.

Die folgenden Beispiele sollen die Erfindung verdeutlichen, ohne sie jedoch einzuschränken.

### Einsatzstoffe:

Kammpolymer P1: statistisches Copolymer aus Methacrylsäure und einem Perfluoralkylmethacrylat M1 der Formel CH₂=C(CH₃)-COO-CH₂-CH₂-(CF₂)₆F mit einem Gewichtsverhältnis von Methacrylsäure zu M1 von 1:9 und einem zahlenmittleren Molekulargewicht von 3000 g/mol (Gelpermeationschromatografie)

Melamin-Formaldehyd-Harz: Methanol-modifiziertes Melamin-Formaldehyd-Kondensat mit einem Molverhältnis Melamin:Formaldehyd:Methanol von 1:5:3

### Beispiele

### Beispiel 1: Herstellung eines erfindungsgemäßen Behälters aus Polyethylen

1.1 Herstellung eines Beschichtungsmittels
   100 g einer wässrigen Dispersion eines Kammpolymeren P1 mit Carboxylgruppen und Perfluoralkylgruppen, die einen Feststoffgehalt von 10 Gew.-% aufwies, wurden mit 100 g einer 10 gew.-%igen wässrigen Lösung eines Melamin/- Formaldehydharzes unter Rühren vermischt. Hierzu gab man 0,2 g Ammoniumchlorid und rührte 10 Minuten bei 20 °C.
1.2 Herstellung eines Behälters
   100 g des Beschichtungsmittels aus 1.1 wurden in eine Polyethylenflasche (Volumen 1 I) gefüllt. Die Flasche wurde verschlossen und anschließend 1 Minute kräftig geschüttelt, so dass sich die Beschichtungslösung auf der Innenwand der Flasche gleichmäßig verteilte. Dann öffnete man die Flasche und goss den Inhalt aus und ließ die Beschichtungsmittels durch Halten der Flasche mit der Öffnung nach unten vollständig heraustropfen. Anschließend trocknete man die Flasche durch Einblasen von Luft und erwärmte die Flasche anschließend 20 Minuten in einem Umluftofen auf 110 °C.

### Beispiel 2: Herstellung eines Behälters aus einem Polyethylen/Polyamid-Koextrudat

In zu Beispiel 1 analoger Weise beschichtete man unter Verwendung von 100 g des Beschichtungsmittels aus 1.1 die Innenfläche einer Kunststoffflasche aus einem Polyethylen/Polyamid-Koextrudat mit einer Innenwand aus Polyamid.

### Beispiel 3 Herstellung eines erfindungsgemäßen Polyethylen-Behälters

### 3.1 Herstellung eines Beschichtungsmittels

5 g einer hydrophobierten, pyrogenen Kieselsäure mit einer BET-Oberfläche von 225 m²/g (bestimmt nach DIN 66131, oberflächenbehandelt mit Trimethylsilylgruppen) wurden in 70 g Isopropanol unter Rühren dispergiert. Hierzu gab man eine Lösung von 20 g des Kammpolymeren P1 in 56 g Wasser und 24 g Isopropanol. Zu dieser Lösung gab man eine Lösung von 20 g des Melamin/Formaldehydharzes in 50 g Wasser und 24 g Isopropanol. Hierzu gab man 0,2 g Ammoniumchlorid und rührte 10 Minuten bei 20 °C.

### 3.2 Herstellung des Behälters

In zu Beispiel 1.2 analoger Weise wurde eine Polyethylenflasche mit einem Innenvolumen von 1 I unter Verwendung von 100 g des Beschichtungsmittels aus 3.1 beschichtet.

### Beispiel 4: Herstellung eines Behälters aus einem Polyethylen/Polyamid-Koextrudat

In zu Beispiel 1 analoger Weise beschichtete man unter Verwendung von 100 g des Beschichtungsmittels aus 3.1 eine Kunststoffflasche aus einem Polyethylen/Polyamid-Koextrudat mit Innenwänden aus Polyamid.

Die erfindungsgemäß beschichteten Kunststoffbehälter der Beispiele 1 bis 4 wurden mit einem handelsüblichen, lösungsmittelfreien, wässrigen Suspensionskonzentrat von Chloridazon mit einem Wirkstoffgehalt von etwa 37 Gew.-% und einem Gehalt an oberflächenaktiven Substanzen von etwa 4,5 Gew.-% sowie geringen Mengen üblicher Formulierungsadditive beaufschlagt. Anschließend wurden die Behälter entleert und zur Bestimmung des Entleerungsverhaltens kopfüber an eine Wägeeinrichtung mit Aufzeichnung gehängt. Die erfindungsgemäß beschichteten Behälter entleerten sich rascher und vollständiger als die unbeschichteten Behälter.

Im Falle des Behälters aus Beispiel 4 betrug die im Behälter verbliebene Restmenge nach dem Entleeren 0,54 Gew.-%, bezogen auf die zur vollständigen Füllung des Behälters erforderliche Menge. Nach dem Spülen mit Wasser betrug die anhaftende Wassermenge etwa 0,25 Gew.-%. Während des Ausgießens war deutlich zu erkennen, wie der Formulierungsfilm an der Gefäßwand riss, wohingegen die Innenwände der unbeschichteten Flaschen während des Ausgießens vom Flüssigkeitsfilm vollständig benetzt wurden.

## Patentansprüche

1. Verwendung von Behältern aus Kunststoffmaterialien, deren Innenwände mit einer polymeren fluororganischen Beschichtung versehen sind, die an ihrer Oberfläche eine Vielzahl an Perfluoralkylgruppen aufweist, für Wirkstoffformulierungen für den Pflanzen- oder Materialschutz.

2. Verwendung nach Anspruch 1, wobei die Perfluoralkylgruppen 1 bis 50 Gew.-% der Beschichtung ausmachen.

3. Verwendung nach einem der vorhergehenden Ansprüche, wobei die Perfluoralkylgruppen 4 bis 10 C-Atome aufweisen.

4. Verwendung nach einem der vorhergehenden Ansprüche, wobei die Beschichtung eine Oberflächenrauhigkeit von nicht mehr als 0,2 µm aufweist.

5. Verwendung nach einem der vorhergehenden Ansprüche, wobei die Schichtdicke der Beschichtung im Bereich von 0,01 bis 500 µm liegt.

6. Verwendung nach einem der vorhergehenden Ansprüche, wobei die Beschichtung wenigstens ein Kammpolymer umfasst, dessen Seitenketten Perfluoralkylgruppen aufweisen.

7. Verwendung nach Anspruch 6, wobei das Kammpolymer aus ethylenisch ungesättigten Monomeren M aufgebaut ist, umfassend
i) wenigstens ein erstes monoethylenisch ungesättigtes Monomer M1, das wenigstens eine Perfluoralkylgruppe aufweist, und
ii) wenigstens ein zweites monoethylenisch ungesättigtes Monomer M2, das keine Perfluoralkylgruppe aufweist.

8. Verwendung nach Anspruch 6 oder 7, wobei die Beschichtung aus wenigstens einem vernetzbaren Kammpolymer und wenigstens einem Vernetzungsmittel aufgebaut ist.

9. Verwendung nach einem der vorhergehenden Ansprüche, wobei das Wandmaterial der Behälter ausgewählt ist unter Polyethylen, Polypropylen, Polyethylenterephthalat, Koextrudaten von Polyethylen oder Polypropylen mit einem unter Polyamiden, Ethylencopolymeren und Polyethylenterphthalat ausgewählten Polymeren.

10. Verwendung nach einem der vorhergehenden Ansprüche, wobei der Behälter ein formstabiler Behälter ist.

11. Verwendung nach einem der vorhergehenden Ansprüche, wobei die Wirkstoffformulierung unter wässrigen Wirkstoffformulierungen und wasserdispergierbaren bzw. wasseremulgierbaren Wirkstoffformulierungen ausgewählt ist.

12. Verwendung nach einem der vorhergehenden Ansprüche, wobei die Wirkstoffformulierung wenigstens ein organisches, unpolares Lösungsmittel in einer Menge von wenigstens 1 Vol.-% enthält.

13. Behälter aus Kunststoffmaterial, dessen Innenwände mit einer polymeren fluororganischen Beschichtung versehen sind, die an ihrer Oberfläche eine Vielzahl an Perfluoralkylgruppen aufweist, wobei die Beschichtung wenigstens ein Kammpolymer umfasst, dessen Seitenketten Perfluoralkylgruppen aufweisen und wobei das Kammpolymer aus ethylenisch ungesättigten Monomeren M aufgebaut ist, umfassend
i) wenigstens ein erstes monoethylenisch ungesättigtes Monomer M1, das wenigstens eine Perfluoralkylgruppe aufweist, und
ii) wenigstens ein zweites monoethylenisch ungesättigtes Monomer M2, das keine Perfluoralkylgruppe aufweist.

14. Verfahren zur Aufbewahrung von Wirkstoffformulierungen für den Pflanzenschutz, wobei man die aufzubewahrende Wirkstoffformulierung in einen Behälter füllt, der unter Behältern aus Kunststoffmaterialien ausgewählt ist, deren Innenwände mit einer polymeren fluororganischen Beschichtung versehen sind, die an ihrer Oberfläche eine Vielzahl an Perfluoralkylgruppen aufweist.

## Claims

1. The use of containers comprising plastic materials, whose inner walls are provided with a polymeric organofluorine coating which has a multiplicity of perfluoroalkyl groups on its surface, for active substance formulations for crop protection or material protection.

2. The use according to claim 1, the perfluoroalkyl groups accounting for from 1 to 50% by weight of the coating.

3. The use according to either of the preceding claims, the perfluoroalkyl groups having 4 to 10 carbon atoms.

4. The use according to any of the preceding claims, the coating having a surface roughness of not more than 0.2 µm.

5. The use according to any of the preceding claims, the layer thickness of the coating being in the range from 0.01 to 500 µm.

6. The use according to any of the preceding claims, the coating comprising at least one comb polymer whose side chains have perfluoroalkyl groups.

7. The use according to claim 6, the comb polymer being composed of ethylenically unsaturated monomers M, comprising
i) at least one first monoethylenically unsaturated monomer M1 which has at least one perfluoroalkyl group and
ii) at least one second monoethylenically unsaturated monomer M2 which has no perfluoroalkyl group.

8. The use according to claim 6 or 7, the coating being composed of at least one crosslinkable comb polymer and at least one crosslinking agent.

9. The use according to any of the preceding claims, the wall material of the containers being selected from polyethylene, polypropylene, polyethylene terephthalate, coextrudates of polyethylene or polypropylene with a polymer selected from polyamides, ethylene copolymers and polyethylene terephthalate.

10. The use according to any of the preceding claims, the container being a dimensionally stable container.

11. The use according to any of the preceding claims, the active substance formulation being selected from aqueous active substance formulations and water-dispersible or water-emulsifiable active substance formulations.

12. The use according to any of the preceding claims, the active substance formulation comprising at least one organic, nonpolar solvent in an amount of at least 1 % by volume.

13. A container comprising plastic material, whose inner walls are provided with a polymeric organofluorine coating which has a multiplicity of perfluoroalkyl groups on its surface, the coating comprising at least one comb polymer whose side chains have perfluoroalkyl groups and the comb polymer being composed of ethylenically unsaturated monomers M, comprising
i) at least one first monoethylenically unsaturated monomer M1 which has at least one perfluoroalkyl group and
ii) at least one second monoethylenically unsaturated monomer M2 which has no perfluoroalkyl group.

14. A method for the safe-keeping of active substance formulations for crop protection, the active substance formulation to be kept safe being introduced into a container selected from containers comprising plastic materials, whose inner walls are provided with a polymeric organofluorine coating which has a multiplicity of perfluoroalkyl groups on its surface.

## Revendications

1. Utilisation de contenants en matériaux plastiques, dont les parois internes sont munies d'un revêtement polymère organique fluoré qui présente à sa surface une pluralité de groupements perfluoroalkyle, pour des formulations de substances actives pour la protection de plantes ou de matériaux.

2. Utilisation selon la revendication 1, dans laquelle les groupements perfluoroalkyle représentent 1 à 50 % en poids du revêtement.

3. Utilisation selon l'une quelconque des revendications précédentes, dans laquelle les groupements perfluoroalkyle présentent 4 à 10 atomes C.

4. Utilisation selon l'une quelconque des revendications précédentes, dans laquelle le revêtement présente une rugosité de surface inférieure ou égale à 0,2 µm.

5. Utilisation selon l'une quelconque des revendications précédentes, dans laquelle l'épaisseur de la couche de revêtement est de 0,01 à 500 µm.

6. Utilisation selon l'une quelconque des revendications précédentes, dans laquelle le revêtement comprend au moins un polymère peigne dont les chaînes latérales comprennent des groupements perfluoroalkyle.

7. Utilisation selon la revendication 6, dans laquelle le polymère peigne est constitué de monomères M à insaturation éthylénique qui comprennent :
i) au moins un premier monomère M1 à insaturation monoéthylénique qui comprend au moins un groupement perfluoroalkyle et
ii) au moins un second monomère M2 à insaturation monoéthylénique qui ne comprend pas de groupement perfluoroalkyle.

8. Utilisation selon la revendication 6 ou 7, dans laquelle le revêtement est constitué d'au moins un polymère peigne réticulable et d'au moins un agent de réticulation.

9. Utilisation selon l'une quelconque des revendications précédentes, dans laquelle le matériau de paroi du contenant est choisi parmi le polyéthylène, le polypropylène, le polyéthylène téréphtalate, les coextrudats de polyéthylène ou de polypropylène avec un polymère choisi parmi les polyamides, les copolymères d'éthylène et le polyéthylène téréphtalate.

10. Utilisation selon l'une quelconque des revendications précédentes, dans laquelle le contenant est un contenant de forme stable.

11. Utilisation selon l'une quelconque des revendications précédentes, dans laquelle la formulation de substances actives est choisie parmi les formulations de substances actives aqueuses et les formulations de substances actives dispersables dans l'eau ou émulsifiables dans l'eau.

12. Utilisation selon l'une quelconque des revendications précédentes, dans laquelle la formulation de substances actives contient au moins un solvant organique non polaire en une quantité supérieure ou égale à 1 % en volume.

13. Contenant en matériau plastique, dont les parois internes sont munies d'un revêtement polymère organique fluoré qui présente à sa surface une pluralité de groupements perfluoroalkyle, dans lequel le revêtement comprend au moins un polymère peigne dont les chaînes latérales présentent des groupements perfluoroalkyle et dans lequel le polymère peigne est constitué de monomères M à insaturation éthylénique qui comprennent :
i) au moins un premier monomère M1 à insaturation monoéthylénique qui comprend au moins un groupement perfluoroalkyle et
ii) au moins un second monomère M2 à insaturation monoéthylénique qui ne comprend pas de groupement perfluoroalkyle.

14. Procédé de conservation de formulations de substances actives pour la protection de plantes, dans lequel la formulation de substances actives à conserver est introduite dans un contenant qui est choisi parmi les contenants en matériaux plastiques dont les parois internes sont munies d'un revêtement polymère organique fluoré qui présente à sa surface une pluralité de groupements perfluoroalkyle.
